# EUROPEAN PATENT SPECIFICATION

(11) **EP 0 690 212 B1**
(45) Date of publication and mention of the grant of the patent: **03.11.1999**
(21) Application number: 95304533.3
(22) Date of filing: 28.06.1995
(51) Int. Cl.: F01N 3/20, F01N 3/28

(54) **A method for utilising a silencer unit and an arrangement for applying the method in a large diesel engine**
Ein Verfahren zur Anwendung eines Schalldämpfers und eine Vorrichtung zur Anwendung des Verfahrens in einem grossen Dieselmotor
Une méthode pour l'utilisation d'un silencieux et installation pour la mise en oeuvre de cette méthode dans un grand moteur Diesel

(30) Priority: 01.07.1994 FI 943157
(43) Date of publication of application: 03.01.1996
(73) Proprietor: Wärtsilä NSD OY AB, 00530 Helsinki (FI)
(72) Inventor: Svahn, Peter, SF-65230 Vasa (FI)
(74) Representative: Newby, Martin John

(56) References cited:
- DE-C- 4 310 961
- FR-A- 2 137 421
- FR-A- 2 341 040
- US-A- 3 556 735
- US-A- 4 403 473
- US-A- 4 854 123
- DIESEL & GAS TURBINE WORLDWIDE, March 1994 BROOKFIELD WI US, page 40 XP 000431280 'EMISSION CONTROL IN MARINE ENGINES'

## Description

This invention relates to a method according to the preamble of claim 1 of adapting a silencer unit of a large diesel engine, and an exhaust gas system according to claim 3 for applying the method in practice.

Large diesel engines refer here to such engines which may be used, for example, as main or auxiliary engines in ships or in power plants for the production of heat and/or electricity.

In diesel engines it is conventional for some kind of a silencer to be connected to an exhaust pipe to reduce the noise caused by the engine. Furthermore, in many countries the environmental standards and laws have become more strict requiring the purification or depuration of exhaust gases. Depending on the fuel used, measures have, in particular, been taken to decrease the contents of nitrogen oxides (NOx-content) of exhaust gases. Perhaps the best solution to the NOx problem is the so called "SCR" (selective catalytic reduction) process, which is based on reducing nitrogen oxides by injecting ammonia upstream of a catalyst. The supplied ammonia may for instance be in liquid form, under pressure without water or under normal atmospheric pressure as a water solution including 25% ammonia. Urea can also be used for the reduction process. A reduction process for reducing the NOx-content of exhaust gases in an internal combustion engine is disclosed in US-A-4,403,473.

In practice the noise reduction and purification of exhaust gases are conventionally achieved by leading the exhaust gases successively through a silencer and a separate SCR unit. This requires an expensive and space requiring construction which causes problems especially when a depuration arrangement has to be installed in a narrow space following the silencer in an engine.

To some degree it has also been understood to combine the noise reduction and depuration functions. For example, in WO-A-93/24744 two stationary silencer units are built in a uniform housing and a separate element is arranged between them which provides catalytic depuration of the exhaust gases. This solution results in a rather complicated construction which is stationary and so cannot be easily modified to cater for different needs of exhaust gas depuration. US-A-3,556,735 also discloses combined silencing and purifying functions for an internal combustion engine. However, there is no suggestion of converting a silencing system to a system with catalytic depurating properties.

An aim of the invention is to provide a novel solution to the noise reduction and purification or depuration of exhaust gases which on the one hand makes it possible to achieve sound silencing and on the other hand allows the depuration process to be modified in a simple way in view of the different depuration requirements of the exhaust gases. In particular it is an aim that the modifying can also be accomplished afterwards in accordance with subsequently appearing needs for the depuration of the exhaust gases. A further aim is to provide a solution providing an uncomplicated construction which is advantageous with regard to costs and space requirements (i.e. apparatus can be made cheaply and as small as possible).

According to one aspect of the invention there is provided a method as claimed in the ensuing claim 1 of adapting a silencer unit of a large diesel engine.

The invention is based on the comprehension that an SCR element for depurating exhaust gases also has a substantial sound silencing property. Accordingly when depuration is required, conventional sound silencing elements can easily be replaced by exhaust depurating elements without increased need for space or greatly weakened sound silencing. With increased depurating requirements for the exhaust gases several, preferably all, of the original sound silencing elements can be replaced by catalytically depurating elements.

According to another aspect of the invention there is provided an exhaust gas system in a large diesel engine, the system being as claimed in the ensuing claim 3. Thus, by providing the body member and the sound silencing elements with a construction and a support in accordance with the invention, the sound silencing elements can be selected according to need in each case. In addition they can easily be mutually changed and replaced. Thus afterwards, in a subsequent installation with increased depurating requirements for the exhaust gases, several, preferably all, of the essentially only sound silencing elements can be replaced by the catalytically depurating elements.

The body member may be cylindrical which is of advantage in view of the construction thereof and provides effective treatment of the exhaust gas flow.

The sound silencing elements of the system that do not essentially affect depuration of the exhaust gases include a flow channel for the exhaust gases. Further the body member is provided with a flame arrester known as such, located in the flow direction upstream of the elements so that it covers the flow channel. The flame arrester can be implemented in many different ways and it can be arranged also to be a part of the first sound silencing element in the flow direction.

The catalytically depurating elements for their part cover in the cross-sectional plane of the body member the whole flow area of the exhaust gases. In addition they are arranged at a small distance from each other. In this case the body member, correspondingly, is provided with a set of apertures passing through the mantle thereof and which are arranged to open between the catalytically depurating elements so that compressed air can be fed through the apertures for accomplishing purification of the elements. Thus soot, dust and other impurities which accumulate on the honeycomb structures of the catalytically depurating elements during operation and which decrease the depurating process when deposited in layers can be removed. Correspondingly it is feasible that some of the apertures are used to suck those impurities removed by the compressed air away from the body member.

Embodiments of the invention will now be described, by way of example only, with particular reference to the accompanying drawings, in which:-
Figures 1 is a sectional view of a silencer unit according to the invention for attachment to an exhaust tube and having a set of sound silencing elements inside;
Figure 2 is a sectional view taken on the line 11-11 of Figure 1;
Figure 3 is a sectional view of the silencer unit of Figure 1 but with the sound silencing elements omitted;
Figure 4 is a sectional view of the silencer unit of Figure 1 which has been modified for depuration of exhaust gases by replacement of the sound silencing elements by exhaust gas depurating elements and by providing the exhaust tube with feeding means for ammonium or urea; and
Figure 5 is a sectional view taken on the line V-V of Figure 4.

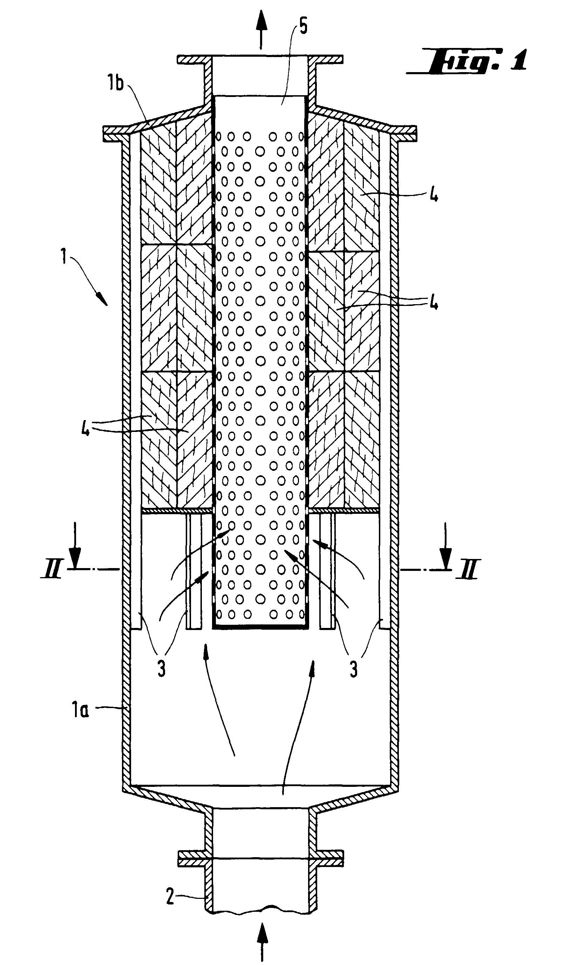

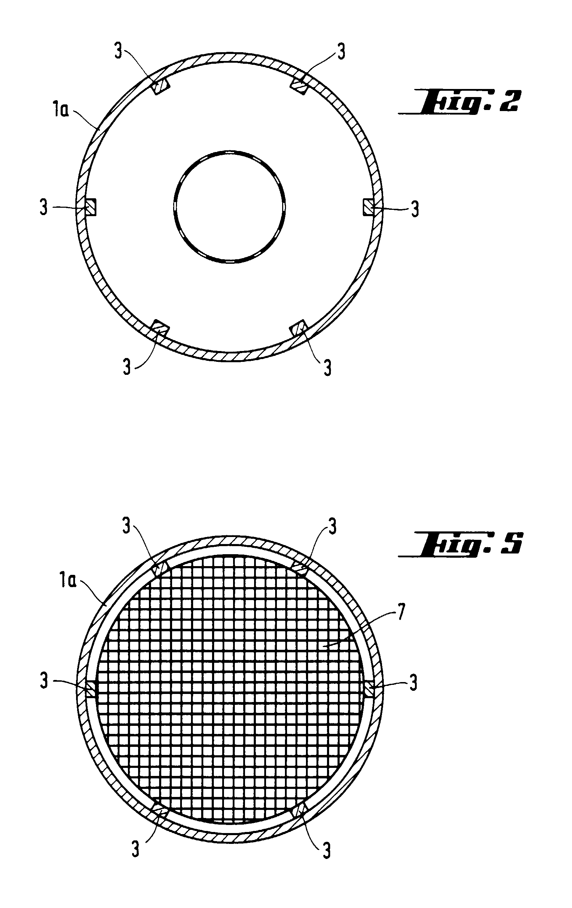

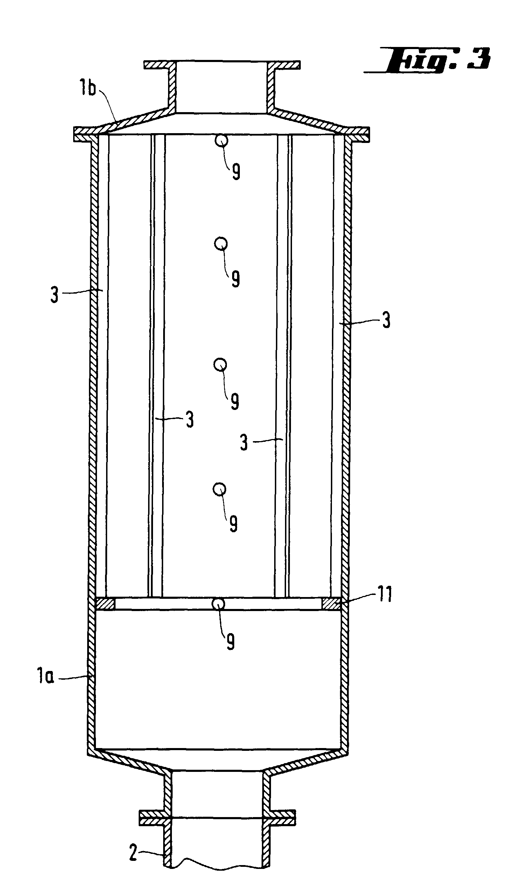

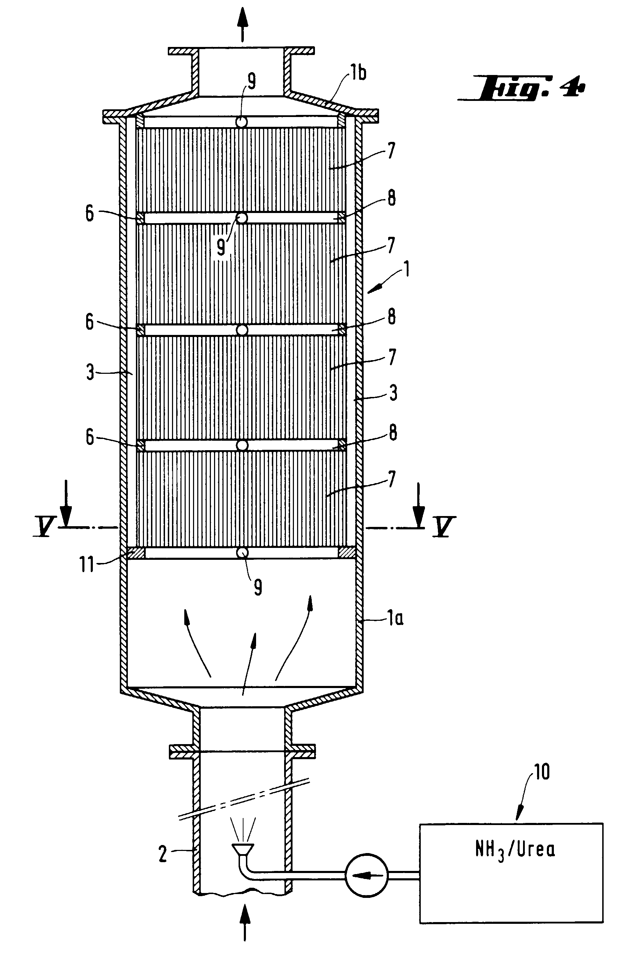

In the drawings reference numeral 1 indicates a silencer unit attached to an exhaust pipe or tube 2 of a large diesel engine (not shown) and including a hollow body member la and a detachable cover element 1b. The inner surface of the body member la has bar-like guiding and support members 3. The body member la encloses a set of sound silencing elements 4 (see Figure 1) or 7 (see Figures 4 and 5) which are supported against the inner wall or mantle surface of the body member la by making use of the guiding and support members 3. Exhaust gas flow is indicated by arrows in Figures 1 and 4.

Within the scope of the exhaust gas system according the invention, the silencer unit 1 can be provided with removable, porous sound silencing elements 4, as shown in Figure 1, including a flow channel 5 for the exhaust gases, which do not substantially affect the depuration of the exhaust gases. Thus, these elements essentially provide a sound silencing solution which is cost advantageous for engine applications but in which depuration of the exhaust gases is not a necessity. In this embodiment, the lower part of a perforated duct associated with, and defining, the flow channel 5 together with the closed end of this duct serve as a flame arresting element for preventing exhaust gases from entering directly into the flow channel 5. The duct can easily be removed at the same time as the sound silencing elements 4 are removed.

On removal of the cover 1b, the sound silencing elements 4 can easily be drawn out from the end of the body member 1a, for example for service or for replacement. If, however, there is a need also for depurating the exhaust gases, especially for decreasing the NOx-content of the exhaust gases, the elements 4 can be replaced by exhaust gas depurating elements 7, which are with advantage so-called SCR elements, as illustrated in Figure 4. In this arrangement, in the flow direction upstream of the body member 1a, the exhaust tube 2 is provided with means 10 for feeding into the exhaust gases a medium containing ammonia, urea or the like reducing reagent applicable for catalytic depuration. Hence, the changed need for depuration of the exhaust gases can, in a simple way, be taken account of by re-equipping the silencer unit 1 within the scope of the system according to the invention but without compromising, however, the sound silencing requirements. Feeding of the reagent can in practice take place also from quite a distance, e.g. several meters, from the silencer unit 1.

As seen in Figures 3 and 4, a ring element 11 can be arranged in the lower part of the body member 1a to prevent the exhaust gases from entering the empty spaces (cf. Figure 5) between the exhaust gas depurating elements 7 and the body member 1a. At the same time the ring element 11 supports the elements 7 in the axial direction.

The exhaust gas depurating elements 7 are arranged so that a small gap 8 is left therebetween. Spacer rings 6 can be used for the purpose of keeping the elements 7 apart from each other. The body member la is provided with a set of apertures 9 penetrating the wall or mantle thereof and arranged to open into the spaces between the spaced apart catalytically depurating elements 7 so that compressed air can be fed therethrough for removing impurities deposited on the elements 7 during operation of the engine. In this case some of the apertures 9, for instance the apertures on the opposite side of the body member 1a, can with advantage be used to remove from the body member 1a, by suction, any impurities removed by the compressed air.

It is clear the body member 1a does not have to be cylindrical and other shapes, for instance a body member with a square formed cross section, would do as well depending on the possible practical problems set by the manufacturing technique for the form of the catalytically depurating elements 7.

The invention is not limited to the embodiments shown but several modifications are feasible within the scope of the attached claims.

## Claims

1. A method of adapting a silencing system of a large diesel engine to a silencing and catalytically depurating system in which a silencer unit (1) is attached to an exhaust tube (2) of the diesel engine and includes a substantially hollow body member (1a) and a set of sound silencing first elements (4) fitted inside the body member (1a) and arranged in successive order in the flow direction of the exhaust gases longitudinally of the body member (1a) so that the exhaust gases are passed through each element (4) one after the other, characterised in that the first elements (4) are supported against an inner mantle surface of the body member and can be removed one at a time from one end of the body member, in that in the flow direction upstream of the body member (1a) the exhaust tube (2) is provided with means (10) for feeding into the exhaust gases a medium, preferably containing ammonia, urea or the like reagent, applicable for catalytic depuration, and in that by withdrawing one or more first elements from said one end of the tube and by introducing one or more elements one at a time into the tube through its said one end, at least one of the said elements (4) is replaced by at least one catalytically depurating second element (7) which, in a cross-sectional plane of the body member, covers the whole flow area of the exhaust gases, is supported against the inner mantle surface of the body member and provides an exhaust gases depurating, catalytic reaction for decreasing the NOx-content of the exhaust gases.

2. A method according to claim 1, characterised in that at increased depurating requirements for the exhaust gases several, preferably all, of said sound silencing first elements (4), including flow channel devices (5) for exhaust gases, are replaced by said catalytically depurating elements (7) which cover the whole flow area of the exhaust gases.

3. An exhaust gas system in a large diesel engine including a silencer unit (1) to be connected to an exhaust tube (2) of the engine and comprising a hollow body member (1a), and a set of elements, which can be installed inside the body member (1a) in successive order in the flow direction of the exhaust gases and through which the exhaust gases are arranged to be conducted, characterised in that the body member (1a) is provided on its inner mantle surface with elongate guiding and support members (3), to which said elements can be supported so that the elements can be installed one at a time one after the other from one end of the body member (1a) axially to their intended in use positions and can be removed one at a time from said one end of the body member, in that the said elements included in the system include sound silencing first elements (4) having no substantial effect on the composition of the exhaust gases and second elements (7) applicable for catalytic depuration of the exhaust gases, which, in a cross-sectional plane of the body member (1a), covers at least substantially the whole flow area of the gases, wherein for depuration of the exhaust gases in the flow direction upstream of the body member the exhaust tube is provided with means (10) for feeding into the exhaust gases a medium, preferably containing ammonia, urea or the like converting reagent, applicable for catalytic depuration, and in addition at least one of said elements in the body member is a second element (7) so that it provides an exhaust gases depurating, catalytic reaction for decreasing the NOx-content of the exhaust gases.

4. A system according to claim 3, characterised in that the body member (1a) is substantially cylindrical.

5. A system according to claim 3 or 4, characterised in that at increased depurating requirements of the exhaust gases several, preferably all, of the said first elements (4) are arranged to be replaced by the said second elements (7).

6. A system according to any of claims 3 to 5, characterised in that each of the sound silencing first elements (4) includes a flow channel (5) for the exhaust gases.

7. A system according to claim 6, characterised in that the body member (1a) is provided with flame arrester means located in the flow direction upstream of said elements so that it covers said flow channels (5).

## Patentansprüche

1. Verfahren zur Umrüstung eines Schalldämpfsystems einer großen Dieselmaschine auf ein schalldämpfendes und katalytisch reinigendes System, in dem eine Schalldämpfeinheit (1) an einem Abgasrohr (2) der Dieselmaschine befestigt ist und ein im wesentlichen hohles Körperelement (1a) und einen Satz an schalldämpfenden ersten Elementen (4) enthält, die innerhalb des Körperelementes (1a) eingesetzt sind und in aufeinanderfolgender Weise in der Strömungsrichtung der Abgase in Längsrichtung des Körperelements (1a) angeordnet sind, so daß die Abgase sukzessive durch jedes Element (4) geführt werden,
dadurch gekennzeichnet, daß die ersten Elemente (4) gegen eine innere Mantelfläche des Körperelementes abgestützt sind und einzeln von einem Ende des Körperelementes aus entfernt werden können,
und daß in der Strömungsrichtung vor dem Körperelement (1a) das Abgasrohr (2) mit einer Vorrichtung (10) zum Zuführen eines Mediums in die Abgase versehen ist, das vorteilhaft Ammoniak, Harnstoff oder dergl. Reaktionsmittel enthält, das für eine katalytische Reinigung einsetzbar ist,
und daß bei Entnahme eines oder mehrerer erster Elemente von diesem einen Ende des Rohres und durch einzelnes Einsetzen eines oder mehrerer Elemente in das Rohr durch das eine Ende, zumindest eines dieser Elemente (4) durch mindestens ein katalytisch reinigendes zweites Element (7) ersetzt wird, welches in einer Querschnittsebene des Körperelementes den gesamten Strömungsbereich der Abgase überdeckt, gegen die innere Mantelfläche des Körperelementes abgestützt ist, und eine abgasreinigende katalytische Reaktion zur Verminderung des NOx-Gehaltes der Abgase bereitstellt.

2. Verfahren gemäß Anspruch 1,
dadurch gekennzeichnet, daß bei erhöhten Anforderungen an die Reinigung der Abgase mehrere, vorzugsweise alle der schalldämpfenden ersten Elemente (4) mit den Strömungskanalvorrichtungen (5) für die Abgase durch die katalytischen Reinigungselemente (7) ersetzt werden, die den gesamten Strömungsbereich der Abgase überdecken.

3. Abgassystem in einer großen Dieselmaschine mit einer Schalldämpfeinheit (1), die an das Abgasrohr (2) der Maschine anzuschließen ist und ein Höhlkörperelement (1a) umfaßt, und einen Satz an Elementen, die in dem Körperelement (1a) in aufeinanderfolgender Weise in der Strömungsrichtung der Abgase eingebaut werden können und durch welche die Abgase geleitet werden,
dadurch gekennzeichnet, daß das Körperelement (1a) auf seiner inneren Mantelfläche mit langgestreckten Führungs- und Traggliedern (3) versehen ist, auf denen die Elemente abgestützt werden können, so daß die Elemente einzeln nacheinander von einem Ende des Körperelementes (1a) aus axial in ihre vorgesehenen Arbeitspositionen eingebaut werden können und einzeln durch dieses eine Ende des Körperelementes entfernt werden können, daß die in dem System enthaltenen Elemente schalldämpfende erste Elemente (4) enthalten, die keinen wesentlichen Einfluß auf die Zusammensetzung der Abgase ausüben und für eine katalytische Abgasreinigung einsetzbare zweite Elemente (7), die in einer Querschnittsebene des Körperelementes (1a) zumindest im wesentlichen den gesamten Strömungsbereich der Gase überdecken, wobei zur Reinigung der Abgase in der Strömungsrichtung vor dem Körperelement das Abgasrohr mit einer Vorrichtung (10) zur Zufuhr eines Mediums in die Abgase versehen ist, das vorzugsweise Ammoniak, Harnstoff oder dergl. Reaktionsmittel enthält, das für eine katalytische Reinigung einsetzbar ist, und darüber hinaus zumindest eines dieser Elemente in dem Körperelement ein zweites Element (7) ist, so daß es eine abgasreinigende katalytische Reaktion zur Verminderung des NOx-Gehaltes der Abgase bereitstellt.

4. System gemäß Anspruch 3,
dadurch gekennzeichnet, daß das Körperelement (1a) im wesentlichen zylindrisch ist.

5. System gemäß Anspruch 3 oder 4,
dadurch gekennzeichnet, daß bei erhöhten Anforderungen an die Reinigung der Abgase mehrere, vorzugsweise alle der ersten Elemente (4) austauschbar durch die zweiten Elemente (7) angeordnet sind.

6. System gemäß einem der Ansprüche 3 bis 5,
dadurch gekennzeichnet, daß jedes der schalldämpfenden ersten Elemente (4) einen Strömungskanal (5) für die Abgase mit einschließt.

7. System gemäß Anspruch 6,
dadurch gekennzeichnet, daß das Körperelement (1a) mit einer Flammenbegrenzungsvorrichtung versehen ist, die in der Strömungsrichtung vor den Elementen angeordnet ist, so daß sie die Strömungskanäle (5) abdeckt.

## Revendications

1. Procédé d'adaptation d'un système de silencieux d'un gros moteur diesel à un système de silencieux et d'épuration catalytique, dans lequel une unité de silencieux (1) est attachée à un tuyau d'échappement (2) du moteur diesel et comporte un organe de corps (1a) substantiellement creux et un ensemble de premiers éléments (4) d'absorption du son montés à l'intérieur de l'organe de corps (1a) et disposés successivement dans la direction de l'écoulement des gaz d'échappement dans le sens longitudinal de l'organe de corps (1a), de sorte que les gaz d'échappement passent à travers chaque élément (4) l'un après l'autre, caractérisé en ce que les premiers éléments (4) sont supportés contre une surface d'enveloppe interne de l'organe de corps et peuvent être enlevés un à la fois par une extrémité de l'organe de corps, en ce que dans la direction de l'écoulement en amont de l'organe de corps (1a), le tuyau d'échappement (2) est pourvu de moyens (10) pour l'alimentation d'un milieu dans les gaz d'échappement, de préférence contenant de l'ammoniac, de l'urée ou un réactif similaire, applicable pour l'épuration catalytique, et en ce qu'en retirant un ou plusieurs premiers éléments de ladite une extrémité du tuyau et en introduisant un ou plusieurs éléments un à la fois dans le tuyau par sa dite une extrémité, au moins l'un desdits éléments (4) est remplacé par au moins un deuxième élément (7) d'épuration catalytique qui, dans un plan en section transversale de l'organe de corps, couvre toute la section d'écoulement des gaz d'échappement, est supporté contre la surface d'enveloppe interne de l'organe de corps et fournit une réaction d'épuration catalytique des gaz d'échappement pour diminuer la teneur en Nox des gaz d'échappement.

2. Procédé selon la revendication 1, caractérisé en ce que pour des exigences accrues d'épuration pour les gaz d'échappement, plusieurs, et de préférence la totalité desdits premiers éléments (4) d'absorption du son, y compris des dispositifs de canaux d'écoulement (5) pour les gaz d'échappement, sont remplacés par lesdits éléments (7) d'épuration catalytique qui couvrent toute la section d'écoulement des gaz d'échappement.

3. Système de gaz d'échappement dans un gros moteur diesel, comportant une unité de silencieux (1) devant être connectée à un tuyau d'échappement (2) du moteur et comprenant un organe de corps creux (1a) et un ensemble d'éléments, qui peuvent être installés à l'intérieur de l'organe de corps (1a) successivement dans la direction d'écoulement des gaz d'échappement et à travers lesquels il est prévu que les gaz d'échappement soient conduits, caractérisé en ce que l'organe de corps (1a) est pourvu, sur sa surface d'enveloppe interne, d'organes allongés de guidage et de support (3), par lesquels lesdits éléments peuvent être supportés de sorte que les éléments puissent être installés un à la fois l'un après l'autre depuis une extrémité de l'organe de corps (1a) axialement par rapport à leurs positions d'utilisation prévues, et puissent être enlevés un à la fois de ladite une extrémité de l'organe de corps, en ce que lesdits éléments inclus dans le système comportent des premiers éléments (4) d'absorption du son n'ayant aucun effet substantiel sur la composition des gaz d'échappement et des deuxièmes éléments (7) applicables pour l'épuration catalytique des gaz d'échappement, qui, dans un plan en section transversale de l'organe de corps (1a), couvrent au moins substantiellement la totalité de la section d'écoulement des gaz, le tuyau d'échappement étant pourvu, pour l'épuration des gaz d'échappement dans la direction d'écoulement en amont de l'organe de corps, de moyens (10) pour l'alimentation d'un milieu dans les gaz d'échappement, contenant de préférence de l'ammoniac, de l'urée ou un réactif de conversion similaire, applicable pour l'épuration catalytique, et en outre au moins l'un desdits éléments dans l'organe de corps étant un deuxième élément (7) de sorte qu'il fournisse une réaction catalytique d'épuration des gaz d'échappement pour diminuer la teneur en Nox des gaz d'échappement.

4. Système selon la revendication 3, caractérisé en ce que l'organe de corps (1a) est substantiellement cylindrique.

5. Système selon la revendication 3 ou 4, caractérisé en ce que pour des exigences d'épuration accrues des gaz d'échappement, plusieurs, de préférence la totalité desdits premiers éléments (4) sont prévus pour être remplacés par lesdits deuxièmes éléments (7).

6. Système selon l'une quelconque des revendications 3 à 5, caractérisé en ce que chacun des premiers éléments (4) d'absorption du son comporte un canal d'écoulement (5) pour les gaz d'échappement.

7. Système selon la revendication 6, caractérisé en ce que l'organe de corps (1a) est pourvu d'un moyen de pare-étincelles situé dans la direction de l'écoulement en amont desdits éléments de sorte qu'il couvre lesdits canaux d'écoulement (5).
